# EUROPEAN PATENT SPECIFICATION

(11) **EP 1 939 508 B1**
(45) Date of publication and mention of the grant of the patent: **04.05.2011**
(21) Application number: 08003892.0
(22) Date of filing: 03.10.2002
(51) Int. Cl.: F16L 5/02, F16L 47/02

(54) **Coupling**
Kupplung
Couplage

(30) Priority: 03.10.2001 GB 0123817; 25.09.2002 GB 0222253
(43) Date of publication of application: 02.07.2008
(62) Divisional of application: 02767687.3
(73) Proprietor: Franklin Fueling Systems Limited, Whitehouse Industrial Estate Ipswich Suffolk IP1 5LN (GB)
(72) Inventor: Boudry, John Alexandre, Brettenham, Suffolk IP7 7PA (GB); Wise, Christopher Richard, Ipswich, Suffolk IP8 3SG (GB)
(74) Representative: Maughan, Sophie Louise

(56) References cited:
- WO-A-01/20219
- DE-C1- 4 012 297
- GB-A- 2 332 255
- US-A- 5 601 315

## Description

### Field of the Invention

This invention relates to fittings for providing a seal between a wall and a pipe passing through an opening in the wall, to a method of providing such a seal, and to an assembly comprising the combination of a pipe, a wall and a fitting providing a seal between the two. The invention is particularly applicable, but in no way limited, to the provision of a seal between a pipe and a wall of a manhole chamber as found in a subterranean fuel tank chamber or pump/dispenser for a sump, for example in a petroleum forecourt installation.

### Background to the Invention

In petroleum forecourt installations, pipework running between dispensing pumps and a subterranean fuel storage tank passes into a manhole chamber which is generally situated directly above the manhole lid of the tank. The chamber is normally defined by an upstanding wall which, when viewed from above, can be of an octagonal, circular, square or rectangular shape, and which includes apertures through which respective pipes pass.

It is desirable to provide a seal between each of the apertures and its respective pipe to avoid ingress of water into and out of the manhole chamber. To that end, it is known to attach a fitting to a portion of the wall around the aperture and a rubber "boot" that sleeves over the pipe and is damped to both the pipe and the fitting by, for example, jubilee (TM) clips. Some types of fitting are bolted to the chamber wall, whilst other types of fitting provide inner and outer parts between which the wall is sandwiched, the inner and outer parts being held together by a screw-threaded connector which extends through the aperture. These connectors often incorporate a rubber seal located between a part of the connector and the chamber wall. Similar fittings are used in the sumps situated beneath the dispensing pumps.

A further fitting of this general type is described in GB2 332 255 (PetroTechnik Ltd). The entire text of this document is incorporated herein by reference and is intended to form an integral part of this disclosure. This describes a fitting comprising a tubular sleeve which passes through the chamber wall and a flange extending radially outwards from the sleeve, the flange incorporating electrofusion heating elements. In use the flange is welded to the chamber wall and a fluid tight seal between the sleeve and a pipe passing through it is completed using a conventional rubber boot

The rubber boots used in prior art chamber to pipe couplings of the type described above have a finite life. Eventually they perish, soften, or show signs of wear and have to be replaced. This is a labour intensive job and requires that the forecourt installation is closed to customers. So not only is there a maintenance cost to bear but there are also lost revenues.

Additionally, however well constructed, a rubber boot can never be as strong as the plastic components used to construct the plastic pipework or the associated chambers and sumps. Thus prior art couplings have relied for their seal on an inherently weak component

It is an object of the present invention to provide a fitting which overcomes or mitigates some or all of the above disadvantages.

### Summary of the Invention

According to a first aspect of the present invention, there is provided a fitting for providing a substantially fluid-tight seal between an opening in a chamber wall and a pipe passing through said opening, said fitting comprising:-
(i) a tubular sleeve for attachment to said pipe adapted to allow the pipe to pass through the sleeve;
(ii) a flange, extending radially outwardly from the sleeve, a first surface of the flange being configured to contact the chamber wall around substantially the whole circumference of the opening and over substantially the whole first surface of the flange;
(iii) a first energy transfer means incorporated in the flange and situated at or near the first surface of the flange, said energy transfer means being adapted to heat the first surface of the flange in order to form a substantially fluid tight seal between the wall and the flange;
characterised in that at least part of the tubular sleeve is a tight sliding fit with the pipe passing through it and in that the part of the sleeve adapted to be in sliding fit contact with the pipe incorporates a second energy transfer means adapted to form a substantially fluid tight seal between the sleeve and the pipe, the second energy transfer means being energisable separately from the first energy transfer means.

This arrangement negates the requirement to use a rubber boot and, for the first time, provides a fitting of this type where both seals are formed by electrofusion welding.

Specifically, this is the first fitting known to the applicant designed to create an electrofusion seal between a secondary containment pipe and the side of a chamber or sump wall.

Preferably the first surface of the flange comprises a fusible material which, when heated via the energy transfer means, at least partially melts, causing the fitting and the wall to be fused together.

In a particularly preferred embodiment the energy transfer means comprise conduction means for conducting an electric current, said conduction means in use being heated by the current to cause heating of the surface in which the energy transfer means is situated.

The process by which two components are fused together as a result of electrical heating from a conductor (situated at or near the interface between the two components prior to fusing) is known as electrofusion. Electrofusion is normally used to provide seals at the join between two lengths of pipe, (particularly polyethylene pipe) in a pipeline. The same process can be used by a fitting in accordance with the present invention if the wall to which the fitting is to be fused is of a suitable thermoplastic material, such as polyethylene.

Preferably the fitting is adapted for use with a wall which is of a material which is not suitable for being attached to the fitting by electrofusion, the first surface of the fitting incorporating an adhesive of a type which is activated by heat, wherein the heating of the first surface by the energy transfer means activates the adhesive and thereby bonds the fitting to the wall. The adhesive can be a thermoplastic, thermoset or cross-linking adhesive.

Preferably the conduction means comprises heating wires which are embedded within the respective surface.

Preferably the sleeve is of a substantially circular cross-section, and the flange is radial.

Preferably the fitting includes terminals for connecting the conduction means to a current supply.

Preferably the internal diameter of the tubular sleeve is substantially uniform along substantially its whole length.

Preferably the fitting is reversible and can be fused to the inside or the outside of a chamber wall.

According to a second aspect of the present invention there is provided a method of forming a seal between an opening in a sump wall or in a chamber wall and a pipe passing through said opening using a fitting as described herein, said method comprising the steps of:-
(a) temporarily securing the fitting over the opening;
(b) applying energy to the first energy transfer means and thereby heating the first surface to cause the fitting to become fused or bonded to the chamber wall in a fluid tight manner;
(c) inserting a pipe through the sleeve;
(d) applying energy to the second energy transfer means and thereby heating the sleeve to cause the fitting to become fused to the pipe wall in a fluid tight manner.

Preferably the energy transfer means comprises conduction means for conducting an electric current, said conduction means in use being heated by the current to cause said heating of the first surface.

Preferably the materials constituting the wall and the first surface are such that their surfaces are fused together by a process of electrofusion.

In an alternative embodiment the method also includes providing an adhesive on the first surface which is activated by said heating to cause the fitting to be bonded to the wall.

Preferably the wall comprises a manhole chamber wall for a subterranean fuel tank and/or a sump chamber wall.

The fitting may advantageously be used in a manhole chamber for a subterranean fuel tank, having a pipe which passes through an aperture in the wall of the chamber, the fitting having a sleeve through which the pipe passes, the fitting being placed against the wall so as to surround the aperture, there being provided energy transfer means for heating the fitting to cause the fitting and chamber wall to be fused or bonded together in a region which surrounds the aperture, and a second set of heating elements for sealing the pipe to the sleeve. The composite assembly so formed, including any rubber or elastomeric boot is also claimed.

### Brief Description of the Drawings

The invention will now be described, by way of example only, with reference to the accompanying drawings in which:
Figure 1 illustrates a partially cut-away side view of part of a petroleum forecourt installation which includes a tank having a manhole chamber having a fitting of the type in question, together with two sumps having similar fittings;
Figure 2 is a diagrammatic view of a cross-section through one half of a fitting;
Figure 3 illustrates a side elevation of a fitting according to a second embodiment, showing a heating wire embedded in the flange of the fitting;
Figure 4 shows an enlargement of a part of the perimeter of the fitting with a code screw;
Figure 5 illustrates a side elevation of the fitting shown in Figure 3;
Figure 6 shows an enlarged view of the end edge of the sleeve;

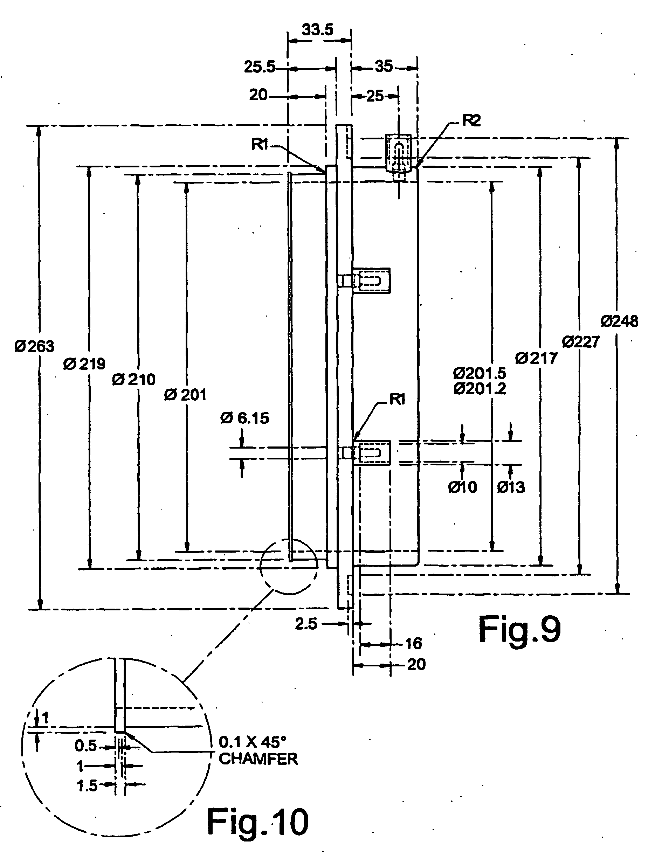

Figures 7, 8, 9 and 10 show the fitting of Figures 3, 4, 5 and 6 including example preferred dimensions in millimetres; and
Figure 11 illustrates in cross-section a multi-entry boot of a type used with fittings according to the present invention with example preferred dimensions in millimetres;
Figure 12 shows an existing (prior art) configuration of fitting used to join a chamber/sump wall to a secondary pipe;
Figure 13 shows the equivalent configuration using a fitting according to the present invention;
Figure 14 shows a fitting according to the present invention used to connect a 75mm diameter secondary containment pipe to a chamber wall via a sliding reducer;
Figure 15 illustrates the space-saving advantage of using a fitting according to the present invention at the bottom of a chamber/sump over the corresponding known arrangement shown in Figure 16.

### Definitions

In this context the following terms have the meanings given below in addition to their ordinary dictionary meanings:-
chamber - any receptacle designed to keep a fluid in or out. This includes, but is not limited to manhole and sump chambers as described herein. It also includes tanks in general.
energy transfer means - a generic term describing any form of energy source. Typically it takes the form of a resistance winding which heats up when an electrical current is passed through it. The term also encompasses other welding techniques including ultrasonic welding and induction welding.
flange - any collar suitable for attaching a fitting to a chamber wall. In the examples given the surface of the flange which contacts the chamber wall is substantially planar. However, it will be understood that the flange must conform to the profile of the chamber wall around the pipe inlet opening. Thus the flange can be formed in any suitable conformation to achieve the necessary contact with a flat or curved surface or even the corner of a container wall.
fluid - whilst the examples provided relate mainly to liquids, the term fluid refers to liquids, vapours and gases. For example, should a leak occur in a secondarily contained pipe in a garage forecourt installation then petroleum or petroleum vapour will collect in the manhole chamber. It is essential that this petrol vapour cannot escape through the wall of the chamber and into the surrounding ground. The technology of the present invention can be applied to pipework for conveying a wide range of fluids. It can be used for water, or for aqueous fluid streams, for solvents or for petroleum products. In this context the term petroleum has a broad meaning including any hydrocarbon-containing product. This includes petrol, gasoline, diesel, aviation fuel, fuel oil or LPG.
pipe - the examples given herein are for a generally circular cross-sectioned single wall pipe. However, the invention also covers other cross-sections such as box sections, corrugated and the like and secondarily contained pipes of the "pipe-within-a-pipe" type. In this case the sealing member for sealing the sleeve to the pipe will be rather more complex.

The invention also encompasses pipes which are not circular in cross-section.

With regards to pipe sizes, fittings according to the present invention can be made to any particular size, depending on market requirements. Whilst most of the following description centres on pipes suitable for petroleum forecourt installations, larger fittings for water or gas main supply lines are perfectly possible. On the other hand, very small versions are possible suitable for connection to electrical conduits. Size is in effect immaterial.
tubular sleeve - this term has a very broad meaning. It includes any projection from the flange which substantially encircles a pipe passing through the fitting and which enables a seal to be made between the fitting and the pipe. The flange and sleeve need not be of unitary construction.

### Description of the Preferred Embodiments

The present embodiments represent currently the best ways known to the applicant of putting the invention into practice. But they are not the only ways in which this can be achieved. They are illustrated, and they will now be described, by way of example only.

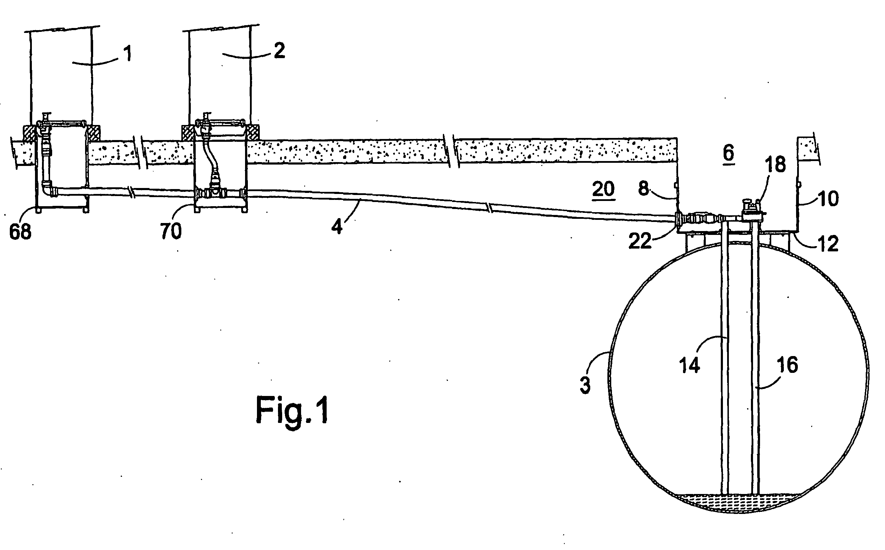

The petroleum forecourt installation shown in Figure 1 comprises a pair of dispensing pumps 1 and 2 connected to a subterranean tank 3 through a pipeline 4. The pipeline 4 is formed from contiguously arranged sections of polyethylene pipe and is usually a secondarily contained pipe. That is to say, the pipeline consists of an inner, primary supply pipe, lined with a ftuid-impervious barrier if required, with the primary pipe contained within an outer secondary pipe. The pipeline 4 extends from the pumps 1 and 2 into a manhole chamber 6 immediately above the tank 3. The chamber 6 is defined by a polyethylene member 8 having a side wall 10 and a base 12.

Figure 1 shows two lines extending from the pipeline 4 into the tank 3. These lines relate to two alternative forms of fuel supply system and are both shown for the sake of completeness. In practice, only one of the lines would extend from the pipeline 4 into the manhole chamber 6. One of those lines is a suction line 14 which is used where the dispensing pumps 1 and 2 are fitted with suction pumps. The alternative line, reference 16, is a pressure line connected to the pipeline 4 via a pump 18 which is operable to propel fuel from the tank 3 to the pumps 1 and 2.

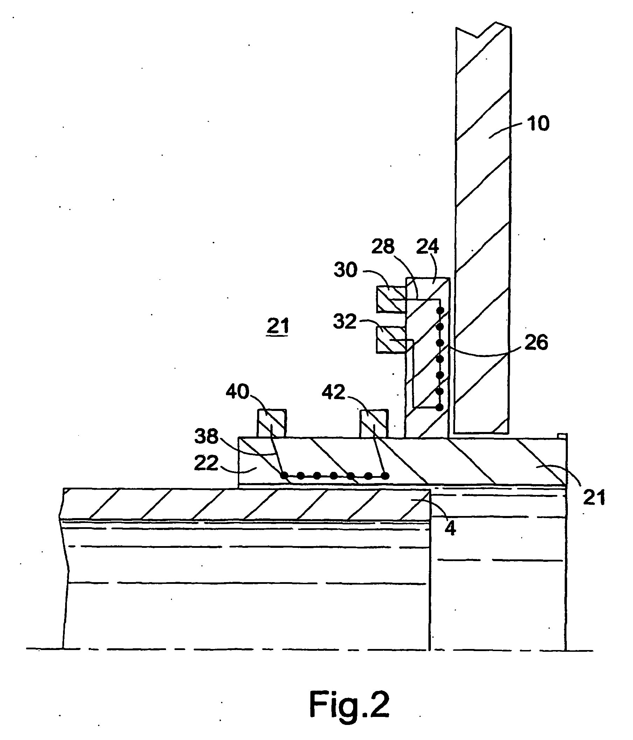

It can be seen from Figure 1 that the wall 10 has to be apertured in order to allow the pipeline 4 to pass into the chamber 6. In order to prevent water leaking from the surrounding ground (here denoted by reference numeral 20) into the chamber 6 through the aperture, and in the event of a spillage to prevent fluid leaking into the environment, the pipe system, and in particular the secondary containment pipe, is sealed to the cylindrical wall 10 by means of a fitting 21, shown in more detail in Figure 2.

The fitting comprises a cylindrical sleeve 22 having an outwardly protecting radial flange 24 towards one end. The sleeve defines a central passage through which the pipe of the pipeline 4 extends. It can also be seen from Figure 2 that the sleeve extends through the aperture in the wall 10 so that the sleeve is at least partially accommodated within the chamber 6, whilst the flange 24 is situated outside the chamber. Alternatively the fitting may be reversed with the flange located inside the chamber. The precise location of the flange along the sleeve is not critical.

The flange 24 has a surface 26 which is flat, to enable the surface to be placed against the wall 10 as shown in Figure 2. Accordingly, the flange 24 makes contact with the wall 10 in a region which surrounds the opening through which the pipe 4 passes. A wire 28, or first energy transfer means, is embedded in the surface 26 in a generally spiral arrangement and the ends of the wire 28 are connected to electrical terminals 30 and 32.

A second wire or energy transfer means, heating element 38 is embedded in the inner surface of part of the sleeve 22. The region of the sleeve where the wire is embedded is a tight sliding fit with the pipe 4. Item 4 could also be a pipe fitting as well as the end of a pipe. The wire 38 is spirally wound around the inside of the sleeve. The ends of the wire are connected to electrical terminals 40 and 42.

Previous fittings have allowed for up to 10° of misalignment of the pipe with respect to the fitting. It has been a long held view in this area of technology that provision for such misalignment was necessary. However, this is not the case with the present invention and it has unexpectedly been discovered that it is possible to align the pipe with the opening with sufficient accuracy that both flange and sleeve can be successfully electrofusion welded.

When the fitting (constituted by the sleeve 22 and flange 24) is installed, the flange 24 is initially pressed against the wall 10, preferably by means of a special clamp, and the terminals 30 and 32 connected to a source of electric current. The current passes through the wire 28, causing the latter to heat the adjacent surface of the flange 24 (and part of the tank 10), to cause the flange 24 and wall 10 to fuse together in a disc-shaped region which substantially surrounds the opening in the tank 10. This not only retains the fitting on the wall 10 but also provides a seal which substantially encircles the opening in the tank, and thus prevents water passing between the flange and the wall 10 through the opening of the latter into the chamber 6. The passage of any water which travels along the surface of the part of the pipe outside the chamber 6 will be blocked by the seal between the pipe and the fitting (see below). This seal also prevents any spillage within the chamber escaping to the outside.

If the chamber wall were to be made of fibreglass, a modified version of this fitting would be used. The modified version is identical to the version shown in Figure 2, apart from the inclusion of a layer of adhesive over the surface of the flange which would constitute the surface 26 on the flange 24 and which overlies the heating wire. The adhesive is a thermoplastic or cross-linking adhesive which, once heated, forms a bond between the flange 24 and the wall 10. Again, since the bond will surround the opening in the wall 10, it also acts as a liquid tight seal to prevent the ingress of water. The choice of adhesive will be determined by the materials specialist. This disclosure is intended to encompass all known adhesives of a suitable type and those yet to be discovered.

Alternatively, either the flange 24 or wall 10 can carry a heat-activated adhesive if the wall 10 is of a material not suitable for electrofusion welding.

Alternative adhesives may also be used such as pressure/heat cured adhesives such as 3M Type DP 8005 or Type DP8010, Other types may also be used. As well as being activated by pressure curing of such adhesives may also be accelerated by heating. In this case the temperatures required are less than those necessary to create an electrofusion weld. Thus, some regulation of the current passing through the first energy transfer means will be required. Such current regulators are known per se and can be used to heat and maintain the surface bearing such heating element at a substantially constant temperature of preferably between 40°C to 80°C, more preferably at approximately 50°C.

Once a seal has been formed between the wall 10 and the fitting 21 a pipe is inserted through the sleeve such that it extends as least as far for the section of the sleeve containing the heating element 38. Terminals 40 and 42 are connected to a source of electric current and current passed through the element. This causes an electrofusion weld between the fitting 21 and the pipe 4 to complete the fluid-tight seal.

A similar heat activated adhesive of any of the types described above can be used to form a bond between the sleeve 22 and pipe 4. This is particularly advantageous if the two components are made of different materials and do not form a satisfactory or reliable electrofusion weld.

Fittings according to the present invention can be formed from any suitable material as selected by the materials specialist. Preferably the fittings are formed from a thermoplastic material such as polyethylene. In a particularly preferred embodiment they are formed as a single unit by turning or casting.

Methods of laying a wire into a flat surface are known, for example by Rutland Plastics (RTM) Ltd, and can be applied here without substantial modification.

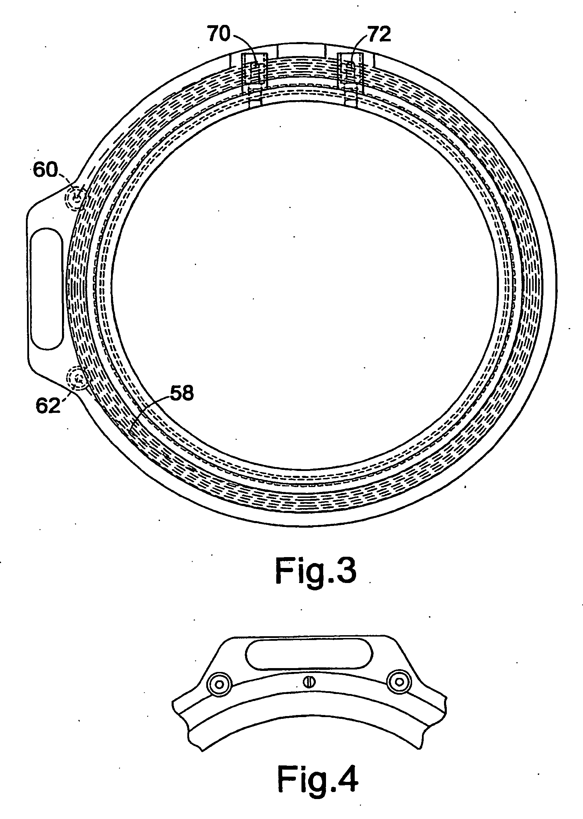

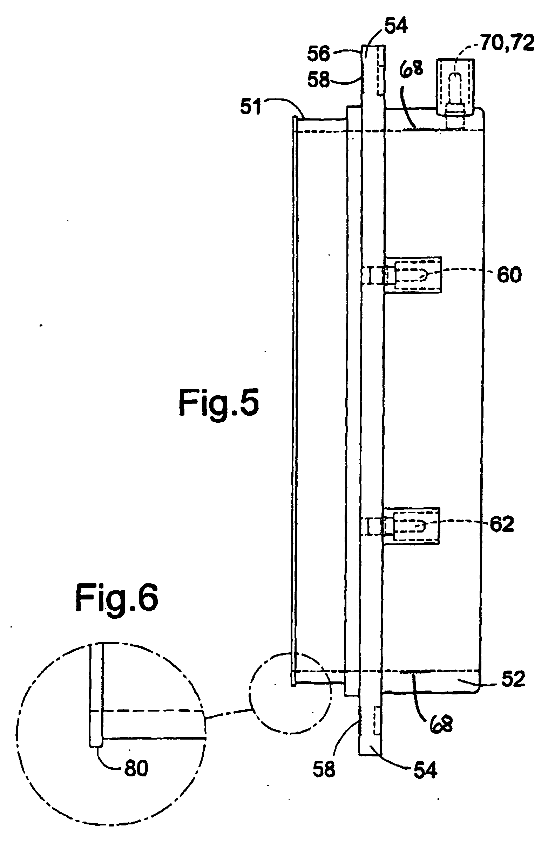

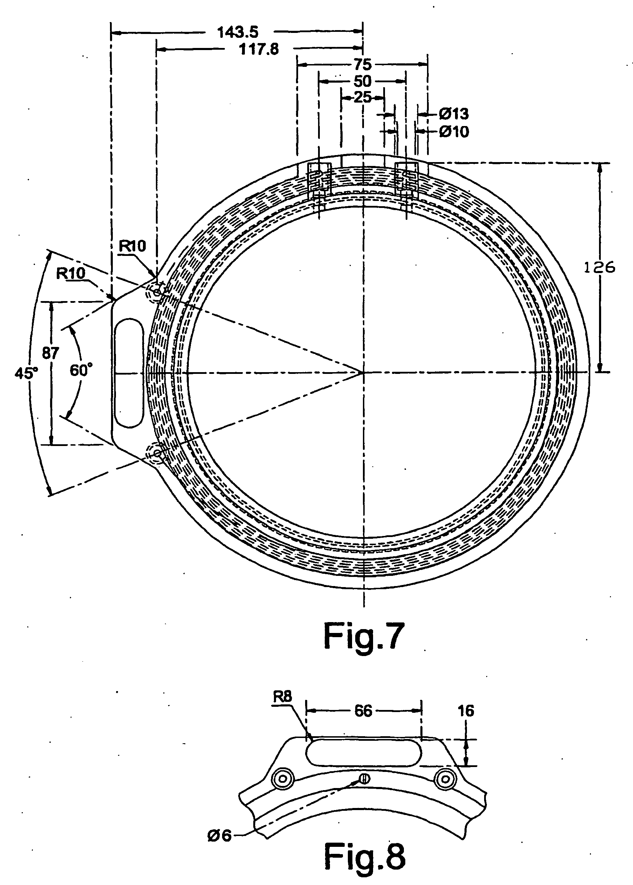

Figures 3 to 7 illustrate a fitting according to a second embodiment. Accordingly, referring primarily to Figure 5, the fitting comprises a flange 54, adapted to contact the wall around an aperture (not shown) through which a pipe passes. For clarity, this pipe is not shown. A wire 58 is embedded in surface 56 in a generally spiral shape as shown in Figure 3 and the ends of the wire are connected to terminals 60 and 62.

A cylindrical sleeve 52 extends substantially at right angles to the flange 54. This sleeve forms a passageway through the fitting and part of the sleeve is designed to be a tight sliding fit with the outer surface of the pipe to be accommodated. This will generally be the outer secondary pipe of a supply pipe system. A second wire or heating element 68 is embedded in the inner surface of sleeve 51 and the ends of this wire are connected to electrical terminals 70 and 72. This arrangement allows, for the first time, a secondary pipe to be electrofusion welded to a chamber wall. The welds between the flange and the chamber wall and the sleeve and the pipe are generally carried out in a stepwise manner. The method of fixing this fitting is similar to that described above.

The fitting also includes a second sleeve 51 which extends away from the flange 54 substantially at right angles on the opposite side of the flange to sleeve 52. It will be seen from Figure 5 that the internal diameter of sleeve portion 51 is larger than the corresponding diameter of sleeve portion 52. This is perfectly possible and the internal diameter of sleeve portion 51 may be small or larger than the internal diameter of sleeve portion 52 as desired.

An important feature is the protrusion 80 associated with the outer end edge circumference of sleeve 51. This is shown more clearly in Figure 6. Where this fitting is used to secure a secondary pipe to a chamber/sump wall in a fluid-tight fashion then the primary pipe within the secondary must also be sealed to it in a fluid-tight fashion. This is generally done using a rubber or elastomeric boot. Where multiple primary pipes are contained within a single secondary pipe then multiple entry boots are required. Such boots are described in GB 0222253.7, the entire text of which is incorporated herein by reference. It is intended that the imported text forms an integral part of this disclosure.

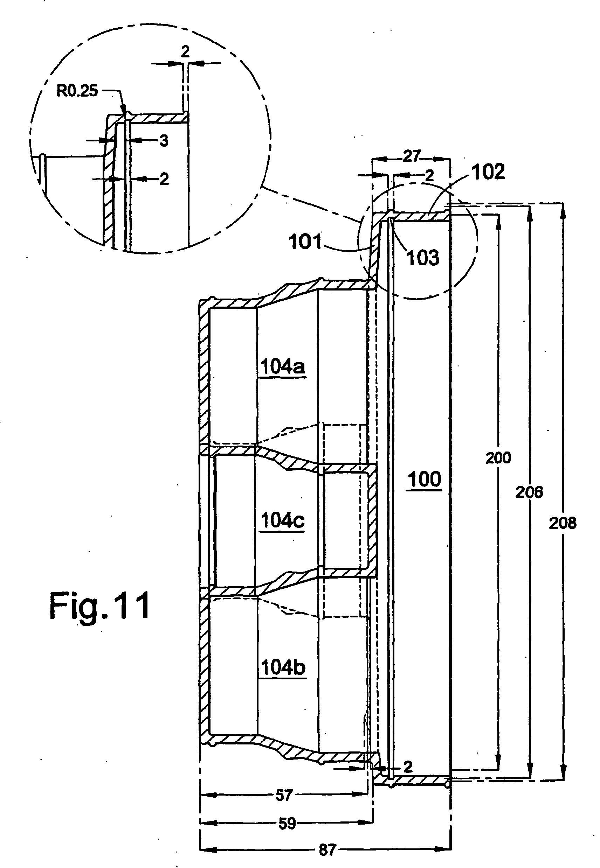

The duct termination boot 100 illustrated in Figure 11 comprises a one piece moulding that is suitably of an elastomeric material such as rubber. The boot 100 has a main body 101 which here has the shape of a substantially flat circular plate with an upstanding annular rim 102. The annular rim 102 is circular cylindrical to fit snugly around outer circumferential wall of the end of a pipe or duct on which the duct termination boot is installed in use.

A broad recess filling a major part of the width of the annular rim 102 is provided to receive the spring steel ring of a jubilee-type clamp for fastening the rim 101 to the duct.

Further provision for securing the rim 101 in place to the end of the duct or to a thermofusion/electrofusion seal plate mounted at the end of the duct may be by providing a circumferential groove or indentation 103 on the inner surface of the annular rim 102. Groove 103 is designed to be a complementary fit with protrusion 80.

Protruding from the front face of the planar plate-like main body portion 101 of the boot 100 are a set of three end cap portions 104 a-c. These end cap moulding portions 104 a-c are integrally moulded with the main body portion 101 and are sized and configured to fit over respective primary pipes carried within the secondary pipe/duct on which the duct termination boot 100 fits in use.

Returning to Figure 6, the protrusion 80 is so sized, shaped and positioned that it engages within a corresponding circumferential indentation or groove within such a boot. Once the boot has been clamped in place this lock-and-key type arrangement provides a considerably greater resistance to the boot becoming displaced than in earlier, prior art boots.

The result of this invention is that it has unexpectedly been discovered that it is possible to design a fitting adapted to join a secondary pipe passing through a chamber wall to that chamber wall by electrofusion welding and wherein the resultant seal is a substantially stronger seal and, importantly, considerably more compact, than had hitherto been possible. Furthermore, by a relatively low cost modification of introducing a protrusion around the outer end circumference of the fitting sleeve which extends into the chamber, and a corresponding groove within the rubber boot, the seal between the fitting and the rubber boot required to complete the assembly is also substantially stronger and more robust than in prior art designs.

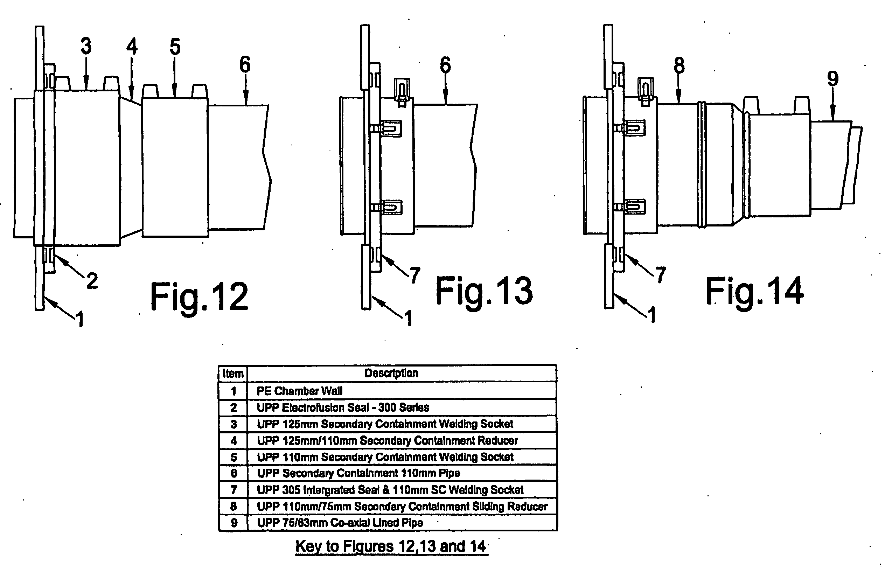

The benefit of the compactness of fittings according to the present invention can be seen more clearly from Figures 12 to 15 inclusive. Referring to Figures 12 to 14, Figure 12 illustrates one current, known method of forming a seal between a chamber wall 1 and a secondary containment 110mm pipe. It will be seen from the key that an electrofusion seal 2, a welding socket 3, a reducer 4 and a further welding socket 5 are all required. That is a total of four components excluding the pipe 6 and chamber wall 1. This should be compared with Figure 13 which shows that these four components can be replaced by a single fitting 7 according to the present invention. There is thus a considerable saving in cost and more particularly in time in forming such a connection. In addition there is a significant reduction in the changes that one of the components or one of the welds might fail. Figure 14 shows how a fitting according to the present invention 7 can be used to connect a somewhat smaller 75mm secondary pipe 9 via a sliding reducer 8 to a chamber wall 1.

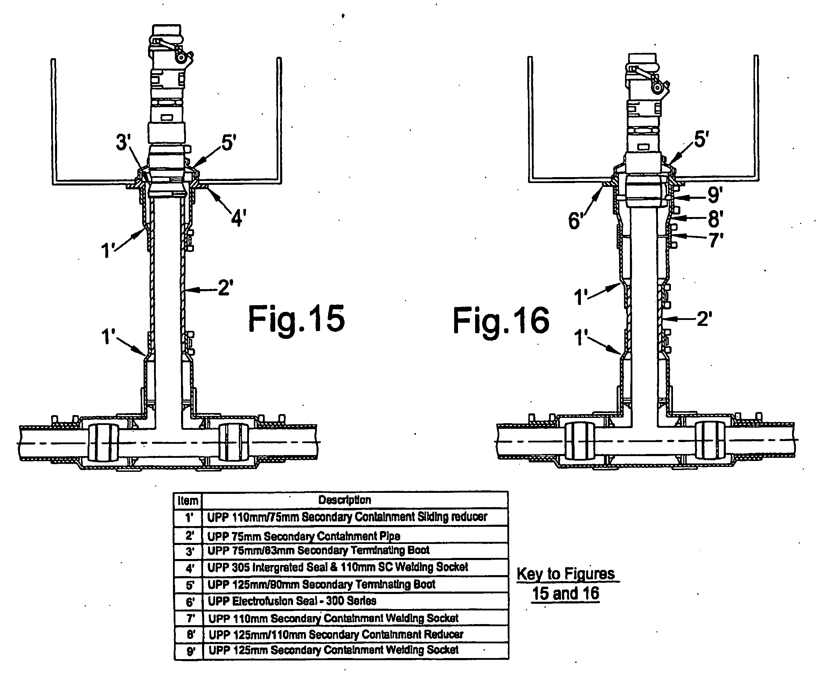

It will be appreciated from Figures 12 and 14 that fittings according to the present invention result in a very compact joint This can be extremely beneficial in certain circumstances, one instance of which is shown in Figure 15 and 16. Both figures illustrate a secondary contained supply pipe running below a chamber/sump with a T-fitting providing a supply into the chamber. In Figure 16 an existing configuration is shown which requires eight components as specified by the key to Figures 15 and 16. It should be noticed that even with a very short section of secondary containment pipe 2¹, there is a considerable distance required between the supply pipe running horizontally and the bottom of the chamber. This distance cannot be reduced further.

This arrangement should be compared with that shown in Figure 15, which utilizes a fitting according to the present invention. This utilizes only five essential components as shown in the key. Importantly, the portion of secondary containment pipe 2¹ is now much longer. This means that by reducing this length the supply pipe can run at a much shallower depth under the chamber. This has major cost and time implications when constructing a large forecourt with multiple dispensing pumps In addition, because each joint takes a considerable time, and therefore cost, to make in construction, there is a major cost saving in reducing the number of joints overall.

The present invention also encompasses a method of fixing a pipe to a chamber or sump wall as described above.

## Claims

1. A fitting (21) for providing a substantially fluid-tight seal between an opening in a chamber wall (10) and a pipe (4) passing through said opening, said fitting (21) comprising:-
a tubular sleeve (22, 52) for attachment to said pipe (4) adapted to allow the pipe (4) to pass through the sleeve (22, 52);
a flange (24, 54), extending radially outwardly from the sleeve (22, 52), a first surface (26, 56) of the flange (24, 54) being configured to contact the chamber wall (10) around substantially the whole circumference of the opening and over substantially the whole first surface (26, 56) of the flange (24, 54);
a first energy transfer means (28, 58) incorporated in the flange (24, 54) and situated at or near the first surface (26, 56) of the flange (24, 54), said energy transfer means (28, 58) being adapted to heat the first surface (26, 56) of the flange (24, 54) in order to form a substantially fluid tight seal between the wall (10) and the flange (24, 54);
**characterised in that** at least part of the tubular sleeve (22, 52) is a tight sliding fit with the pipe (4) passing through it and **in that** that part of the sleeve (22, 52) incorporates a second energy transfer means (38, 68) adapted to form a substantially fluid tight seal between the sleeve (22, 52) and the pipe (4), the second energy transfer means (38, 68) being energisable separately from the first energy transfer means (28, 58).

2. A fitting (21) according to Claim 1, in which the first surface (26, 56) of the flange (24, 54) comprises a fusible material which, when heated via the energy transfer means (28, 58), at least partially melts, causing the fitting (24, 54) and the wall (10) to be fused together.

3. A fitting (21) according to either Claim 1 or Claim 2, in which the energy transfer means (28, 38) comprise conduction means for conducting an electric current, said conduction means in use being heated by the current to cause heating of the surface in which the energy transfer means (28, 38, 58, 68) is situated.

4. A fitting (21) according to Claim 1 or Claim 3 when dependent on Claim 1, in which the fitting (21) is adapted for use with a wall (10) which is of a material which is not suitable for being attached to the fitting by electrofusion, the first surface (26, 56) of the fitting (21) incorporating an adhesive of a type which is activated by heat, wherein the heating of the first surface (26, 56) by the energy transfer means activates the adhesive and thereby bonds the fitting (21) to the wall (10).

5. A fitting (21) according to Claim 4, in which the adhesive is selected from a thermoplastic, thermoset or cross-linking adhesive.

6. A fitting (21) according to Claim 3, or Claim 4 or Claim 5 when dependent on Claim 3, in which the conduction means comprises heating wires (28, 38) which are embedded within the respective surface (26, 22, 56, 52).

7. A fitting (21) according to any preceding claim, in which the sleeve (22, 52) is of a substantially circular cross-section, and the flange (24) is radial.

8. A fitting (21) according to Claim 3 or Claim 6, in which the fitting (21) includes terminals (40, 42, 70, 72, 60, 62, 70, 72) for connecting the conduction means to a current supply.

9. A fitting (21) according to any preceding claim in which the internal diameter of the tubular sleeve (22, 52) is substantially uniform along substantially its whole length.

10. A fitting (21) according to any preceding claim wherein the fitting (21) is reversible and can be fused to the inside or the outside of a chamber wall (10).

11. A fitting (21) according to any preceding claim wherein the sleeve (22, 52) extends on both sides of the flange (24, 54, 51) and on the outer end edge of the sleeve (22, 52) on the end of the sleeve, furthest from the second energy transfer means (38, 68) there is provided a protrusion (80) adapted to engage with a correspondingly shaped indentation (103) in a rubber boot (100) adapted to fit over the sleeve (22).

12. A fitting (21) assembly comprising a fitting as described in any preceding claim, a chamber (6) and a pipe (4) together with an elastomeric boot (100).

13. A fitting (21) assembly as claimed in Claim 12 wherein the elastomeric boot (100) incorporates an indentation (103) so sized, shaped and positioned that it cooperatively engages with a protrusion (80) on the outer surface of the sleeve (22, 52) of the fitting (21).

14. A method of forming a seal between an opening in a sump wall or in a chamber wall (10) and a pipe (4) passing through said opening using a fitting (21) according to any of Claims 1 to 12 inclusive, said method comprising the steps of:-
(e) temporarily securing the fitting (21) over the opening;
(f) applying energy to the first energy transfer means (28, 58) and thereby heating the first surface (26, 56) to cause the fitting (21) to become fused or bonded to the chamber wall (10) in a fluid tight manner;
(g) inserting a pipe (4) through the sleeve (22, 52);
(h) applying energy to the second energy transfer means (38, 68) and thereby heating the sleeve (22) to cause the fitting (21) to become fused to the pipe (4) wall in a fluid tight manner.

15. A method according to Claim 14, in which the energy transfer means (28, 38, 58, 68) comprises conduction means for conducting an electric current, said conduction means in use being heated by the current to cause said heating of the first surface (26, 56, 22).

16. A method according to Claim 14 or Claim 15 in which the materials constituting the wall (10) and the first surface (26, 56) are such that their surfaces are fused together by a process of electrofusion.

17. A method according to Claim 14 or Claim 15, in which the method also includes providing an adhesive on either or both of the first surface or the second surface which adhesive is activated by said heating to cause the fitting to be bonded to the wall (10) or to the pipe (4) or to both.

18. A method according to any of Claims 14 to 17 inclusive, in which the wall (10) comprises a manhole chamber wall for a subterranean fuel tank (4) and/or a sump chamber wall.

19. An installation comprising a fitting (21) according to any one of Claims 1-13, a chamber or sump (6) and a pipe (4) fixed to a wall of the chamber or sump (6) by the fitting (21).

20. An installation as claimed in Claim 19, wherein the installation is a petroleum forecourt installation and the chamber (6) is located above a subterranean tank (3), the pipe (4) extends from the subterranean tank (3) through the chamber wall to a dispensing pump (1, 2).

21. An installation as claimed in Claim 19 or Claim 20, wherein the installation is a petroleum forecourt installation and the sump (6) is located below a dispensing pump (1, 2), the pipe (4) extending through the sump wall to the dispensing pump (1,2).

## Patentansprüche

1. Armatur (21) zur Schaffung einer im Wesentlichen Strömungsmittel-dichten Abdichtung zwischen einer Öffnung in einer Kammerwand (10) und einem Rohr (4), das durch diese Öffnung hindurchläuft, wobei die Armatur (21) Folgendes umfasst:
eine rohrförmige Hülse (22, 52) zur Anbringung an dem Rohr (4), die so ausgebildet ist, dass sie ein Hindurchlaufen des Rohres (4) durch die Hülse (22, 52) ermöglicht;
einen Flansch (24, 54), der sich von der Hülse (22, 52) radial nach außen erstreckt, wobei eine erste Oberfläche (26, 56) des Flansches (24, 54) so konfiguriert ist, dass sie mit der Kammerwand (10) im Wesentlichen um den gesamten Umfang der Öffnung herum und über im Wesentlichen die gesamte erste Oberfläche (26, 56) des Flansches (24, 54) in Kontakt steht;
eine erste Energieübertragungseinrichtung (28, 58), die in den Flansch (24, 54) eingefügt ist und sich an oder in der Nähe der ersten Oberfläche (26, 56) des Flansches (24, 54) befindet, wobei die Energieübertragungseinrichtung (28, 58) zum Erhitzen der ersten Oberfläche (26, 56) des Flansches (24, 54) ausgebildet ist, um eine im Wesentlichen Strömungsmittel-dichte Abdichtung zwischen der Wand (10) und dem Flansch (24, 54) zu schaffen;
**dadurch gekennzeichnet, dass** zumindest ein Teil der rohrförmigen Hülse (22, 52) einen engen Gleitsitz mit dem durch sie hindurchlaufenden Rohr (4) aufweist, und dass ein Teil der Hülse (22, 52) eine zweite Energieübertragungseinrichtung (38, 68) beinhaltet, die zur Bildung einer im Wesentlichen Strömungsmittel-dichten Abdichtung zwischen der Hülse (22, 52) und dem Rohr (4) ausgebildet ist, wobei die zweite Energieübertragungseinrichtung (38, 68) getrennt von der ersten Energieübertragungseinrichtung (28, 58) mit Energie zu speisen ist.

2. Armatur (21) nach Anspruch 1, bei der die erste Oberfläche (26, 56) des Flansches (24, 54) ein schmelzbares Material umfasst, das bei seiner Erhitzung durch die Energieübertragungseinrichtung (28, 58) zumindest teilweise schmilzt und ein Verschmelzen der Armatur (24, 54) und der Wand (10) miteinander hervorruft.

3. Armatur (21) nach Anspruch 1 oder 2, bei dem die Energieübertragungseinrichtungen (28, 38) leitfähige Einrichtungen zum Leiten eines elektrischen Stromes umfassen, und die leitfähigen Einrichtungen im Gebrauch durch den Strom erhitzt werden, um ein Erhitzen der Oberfläche hervorzurufen, in der sich die Energieübertragungseinrichtung (28, 38, 58, 68) befindet.

4. Armatur (21) nach Anspruch 1 oder Anspruch 3 unter Rückbeziehung auf Anspruch 1, bei der die Armatur (21) zur Verwendung mit einer Wand (10) ausgebildet ist, die aus einem Material besteht, das für eine Anbringung an der Armatur durch Elektroschmelzen nicht geeignet ist, wobei die erste Oberfläche (26, 56) der Armatur (21) ein Klebemittel von dem Typ beinhaltet, der durch Wärme aktiviert wird, wobei das Erhitzen der ersten Oberfläche (26, 56) durch die Energieübertragungseinrichtung das Klebemittel aktiviert und damit die Armatur (21) mit der Wand (10) verbindet.

5. Armatur (21) nach Anspruch 4, bei der das Klebemittel aus thermoplastischem, wärmehärtendem oder vernetzendem Klebemittel ausgewählt ist.

6. Armatur (21) nach Anspruch 3 oder Anspruch 4 oder Anspruch 5 unter Rückbeziehung auf Anspruch 3, bei der die leitenden Einrichtungen Heizdrähte (28, 38) umfassen, die in die jeweilige Oberfläche (26, 22, 56, 52) eingebettet sind.

7. Armatur (21) nach einem der vorhergehenden Ansprüche, bei der die Hülse (22, 52) einen im Wesentlichen kreisförmige Querschnitt aufweist und der Flansch (24) radial ist.

8. Armatur (21) nach Anspruch 3 oder Anspruch 6, bei der die Armatur (21) Anschlüsse (40, 42, 70, 72, 60, 62, 70, 72) zum Verbinden der leitfähigen Einrichtungen mit einer Stromversorgung einschließt.

9. Armatur (21) nach einem der vorhergehenden Ansprüche, bei der der Innendurchmesser der rohrförmigen Hülse (22, 52) entlang im Wesentlichen ihrer gesamten Länge im Wesentlichen gleichförmig ist.

10. Armatur (21) nach einem der vorhergehenden Ansprüche, bei der die Armatur (21) umkehrbar ist und mit der Innenseite oder der Außenseite der Kammer wand (10) verschmelzbar ist.

11. Armatur (21) nach einem der vorhergehenden Ansprüche, bei der sich die Hülse (22, 52) auf beiden Seiten des Flansches (24, 54, 51) erstreckt und bei der auf der äußeren Endkante der Hülse (22, 52) auf dem Ende der Hülse, das am weitesten von der Energieübertragungseinrichtung (38, 68) entfernt ist, ein Vorsprung (80) vorgesehen ist, der für den Eingriff mit einer entsprechend geformten Einprägung (103) in einer Gummimanschette (100) ausgebildet ist, die so ausgebildet ist, dass sie über die Hülse (22) passt.

12. Armatur-(21) Baugruppe, die eine Armatur nach einem der vorhergehenden Ansprüche, eine Kammer (6) und ein Rohr (4) zusammen mit einer Elastomer-Manschette (100) umfasst.

13. Armatur-(21) Baugruppe nach Anspruch 12, bei der die Elastomer-Manschette (100) eine Einprägung (103) beinhaltet, die so bemessen, geformt und angeordnet ist, dass sie im Zusammenwirken mit einem Vorsprung (80) auf der Außenoberfläche der Hülse (22, 52) der Armatur (21) in Eingriff steht.

14. Verfahren zur Herstellung einer Abdichtung zwischen einer Öffnung in einer Sumpf-Wand oder in einer Kammerwand (10) und einem Rohr (4), das durch die Öffnung hindurchläuft, unter Verwendung einer Armatur (21) nach einem der Ansprüche 1 bis 12 einschließlich, wobei das Verfahren die folgenden Schritte umfasst:
(e) vorübergehendes Befestigen der Armatur (21) über der Öffnung;
(f) Zuführen von Energie an die erste Energieübertragungseinrichtung (28, 58) und **dadurch** Erhitzen der ersten Oberfläche (26, 56), um ein Verschmelzen oder Verbinden der Armatur (21) mit der Kammerwand (10) in einer Strömungsmittel-dichten Weise zu bewirken;
(g) Einsetzen eines Rohres (4) durch die Hülse (22, 52) hindurch;
(h) Zuführen von Energie an die zweite Energieübertragungseinrichtung (38, 68) und **dadurch** Erhitzen der Hülse (22), um ein Verschmelzen der Armatur (21) mit der Wand des Rohres (4) in einer Strömungsmittel-dichten Weise zu bewirken.

15. Verfahren nach Anspruch 14, bei dem die Energieübertragungseinrichtung (28, 38, 58, 68) leitfähige Einrichtungen zum Leiten eines elektrischen Stromes umfasst, wobei die leitfähigen Einrichtungen im Gebrauch durch den Strom erhitzt werden, um die Erhitzung der ersten Oberfläche (26, 56, 22) zu bewirken.

16. Verfahren nach Anspruch 14 oder 15, bei dem die Materialien, die die Wand (10) und die erste Oberfläche (26, 56) bilden, derart sind, dass ihre Oberflächen durch einen Elektroschmelz-Prozess miteinander verschmolzen werden.

17. Verfahren nach Anspruch 14 oder 15, bei dem das Verfahren weiterhin die Bereitstellung eines Klebemittels auf einer oder beiden der ersten Oberfläche oder der zweiten Oberfläche einschließt, wobei das Klebemittel durch die Erhitzung aktiviert wird, um ein Verbinden mit der Wand (10) oder dem Rohr (14) oder mit beiden zu bewirken.

18. Verfahren nach einem der Ansprüche 14 bis 17, bei dem die Wand (10) eine Einstiegschacht-Kammerwand für einen unterirdischen Treibstofftank (4) und/oder eine Sumpf-Kammerwand umfasst.

19. Eine Installation, die eine Armatur (21) nach einem der Ansprüche 1 bis 13, eine Kammer oder einen Sumpf (6) und ein Rohr (4) umfasst, das an einer Wand der Kammer oder des Sumpfes (6) durch die Armatur (21) befestigt ist.

20. Installation nach Anspruch 19, bei der die Installation eine Mineralöl-Tankstations-Installation ist und die Kammer (6) oberhalb eines unterirdischen Tanks (3) liegt, wobei sich das Rohr (4) von dem unterirdischen Tank (3) durch die Kammerwand zu einer Abgabepumpe (1, 2) erstreckt.

21. Installation nach Anspruch 19 oder 20, bei der die Installation eine Mineralöl-Tankstations-Installation ist und der Sumpf (6) unterhalb einer Abgabepumpe (1, 2) liegt, wobei sich das Rohr (6) durch die Sumpf-Wand zu der Abgabe-Pumpe (1, 2) erstreckt.

## Revendications

1. Raccord (21) pour fournir un joint sensiblement étanche au fluide entre une ouverture dans une paroi de chambre (10) et un tuyau (4) passant à travers ladite ouverture, ledit raccord (21) comprenant :
un manchon tubulaire (22, 52) pour la fixation audit tuyau (4) adapté pour permettre au tuyau (4) de passer à travers le manchon (22, 52) ;
une bride (24, 54) s'étendant radialement vers l'extérieur à partir du manchon (22, 52), une première surface (26, 56) de la bride (24, 54) étant configurée pour être en contact avec la paroi de chambre (10) sensiblement autour de toute la circonférence de l'ouverture et sensiblement sur toute la première surface (26, 56) de la bride (24, 54) ;
des premiers moyens de transfert d'énergie (28, 58) incorporés dans la bride (24, 54) et situés au niveau de ou à proximité de la première surface (26, 56) de la bride (24, 54), lesdits moyens de transfert d'énergie (28, 58) étant adaptés pour chauffer la première surface (26, 56) de la bride (24, 54) afin de former un joint sensiblement étanche au fluide entre la paroi (10) et la bride (24, 54) ;
**caractérisé en ce qu'**au moins une partie de manchon tubulaire (22, 52) est un raccord coulissant serré avec le tuyau (4) passant à travers ce dernier et **en ce qu'**une partie du manchon (22, 52) comprend des deuxièmes moyens de transfert d'énergie (38, 68) adaptés pour former un joint sensiblement étanche au fluide entre le manchon (22, 52) et le tuyau (4), les deuxièmes moyens de transfert d'énergie (38, 68) pouvant être alimentés séparément des premiers moyens de transfert d'énergie (28, 58).

2. Raccord (21) selon la revendication 1, dans lequel la première surface (26, 56) de la bride (24, 54) comprend un matériau fusible qui, lorsqu'il est chauffé via les moyens de transfert d'énergie (28, 58), fond au moins partiellement, amenant le raccord (24, 54) et la paroi (10) à fondre ensemble.

3. Raccord (21) selon la revendication 1 ou la revendication 2, dans lequel les moyens de transfert d'énergie (28, 38) comprennent des moyens de conduction pour conduire un courant électrique, lesdits moyens de conduction, à l'usage, étant chauffés par le courant pour provoquer le chauffage de la surface sur laquelle lesdits moyens de transfert d'énergie (28, 38, 58, 68) sont situés.

4. Raccord (21) selon la revendication 1 ou la revendication 3, lorsqu'elle dépend de la revendication 1, dans lequel le raccord (21) est adapté pour être utilisé avec une paroi (10) qui est réalisée avec un matériau qui n'est pas apte à être fixé sur le raccord par électrofusion, la première surface (26, 56) du raccord (21) comprenant un adhésif d'un type qui est activé par la chaleur, dans lequel le chauffage de la première surface (26, 56) par les moyens de transfert d'énergie active l'adhésif et relie ainsi le raccord (21) à la paroi (10).

5. Raccord (21) selon la revendication 4, dans lequel l'adhésif est choisi parmi un adhésif thermoplastique, thermodurci ou de réticulation.

6. Raccord (21) selon la revendication 3 ou la revendication 4 ou la revendication 5 lorsqu'elles dépendent de la revendication 3, dans lequel les moyens de conduction comprennent des fils de chauffage (28, 38) qui sont incrustés dans la surface (26, 22, 56, 52) respective.

7. Raccord (21) selon l'une quelconque des revendications précédentes, dans lequel le manchon (22, 52) a une section transversale sensiblement circulaire et la bride (24) est radiale.

8. Raccord (21) selon la revendication 3 ou la revendication 6, dans lequel le raccord (21) comprend des bornes (40, 42, 70, 72, 60, 62, 70, 72) pour raccorder les moyens de conduction à une alimentation de courant.

9. Raccord (21) selon l'une quelconque des revendications précédentes, dans lequel le diamètre interne du manchon tubulaire (22, 52) est sensiblement uniforme sensiblement le long de toute sa longueur.

10. Raccord (21) selon l'une quelconque des revendications précédentes, dans lequel le raccord (21) est réversible et peut être soudé sur l'intérieur ou l'extérieur d'une paroi de chambre (10).

11. Raccord (21) selon l'une quelconque des revendications précédentes, dans lequel le manchon (22, 52) s'étend des deux côtés de la bride (24, 54, 51) et sur le bord d'extrémité externe du manchon (22, 52) sur l'extrémité du manchon, plus à distance des deuxièmes moyens de transfert d'énergie (38, 68), on trouve une protubérance (80) adaptée pour se mettre en prise avec une indentation (103) formée de manière correspondante dans une gaine en caoutchouc (100) adaptée pour se monter sur le manchon (22).

12. Ensemble de raccord (21) comprenant un raccord selon l'une quelconque des revendications précédentes, une chambre (6) et un tuyau (4) conjointement à une gaine à base d'élastomère (100).

13. Ensemble de manchon (21) selon la revendication 12, dans lequel la gaine à base d'élastomère (100) comprend une indentation (103) dimensionnée, formée et positionnée de sorte qu'elle se met en prise de manière coopérative avec une protubérance (80) sur la surface externe du manchon (22, 52) du raccord (21).

14. Procédé pour former un joint d'étanchéité entre une ouverture dans une paroi de carter d'huile ou dans une paroi de chambre (10) et un tuyau (4) passant à travers ladite ouverture en utilisant un raccord (21) selon l'une quelconque des revendications 1 à 12 y compris, ledit procédé comprenant les étapes consistant à :
(e) fixer temporairement le raccord (21) sur l'ouverture ;
(f) appliquer de l'énergie sur les premiers moyens de transfert d'énergie (28, 58) et chauffer ainsi la première surface (26, 56) pour amener le raccord (21) à être fusionné ou à être lié à la paroi de chambre (10) d'une manière étanche au fluide ;
(g) insérer un tuyau (4) à travers le manchon (22, 52) ;
(h) appliquer de l'énergie sur les deuxièmes moyens de transfert d'énergie (38, 68) et chauffer ainsi le manchon (22) pour amener le raccord (21) à se fondre sur la paroi du tuyau (4) d'une manière étanche au fluide.

15. Procédé selon la revendication 14, dans lequel les moyens de transfert d'énergie (28, 38, 58, 68) comprennent des moyens de conduction pour conduire un courant électrique, lesdits moyens de conduction, à l'usage, étant chauffés par le courant pour provoquer ledit chauffage de la première surface (26, 56, 22).

16. Procédé selon la revendication 14 ou la revendication 15, dans lequel les matériaux constituant la paroi (10) et la première surface (26, 56) sont tels que leurs surfaces sont fusionnées ensemble par un procédé d'électrofusion.

17. Procédé selon la revendication 14 ou la revendication 15, dans lequel le procédé comprend également l'étape consistant à prévoir un adhésif sur chacune ou les deux parmi la première surface ou la deuxième surface, lequel adhésif est activé par ledit chauffage pour amener le raccord à être lié à la paroi (10) ou au tuyau (4) ou aux deux.

18. Procédé selon l'une quelconque des revendications 14 à 17 y compris, dans lequel la paroi (10) comprend une paroi de chambre de regard pour un réservoir de carburant souterrain (4) et/ou une paroi de chambre de carter d'huile.

19. Installation comprenant un raccord (21) selon l'une quelconque des revendications 1 à 13, une chambre ou carter d'huile (6) et un tuyau (4) fixé à une paroi de la chambre ou du carter d'huile (6) par le raccord (21).

20. Installation selon la revendication 19, dans laquelle l'installation est une installation de pompe à essence et la chambre (6) est positionnée au-dessus d'un réservoir souterrain (3), le tuyau (4) s'étend à partir du réservoir souterrain (3) en passant par la paroi de chambre jusqu'à une pompe de distribution (1, 2).

21. Installation selon la revendication 19 ou la revendication 20, dans laquelle l'installation est une installation de pompe à essence et le carter d'huile (6) est positionné au-dessous d'une pompe de distribution (1, 2), le tuyau (4) s'étendant à travers la paroi de carter d'huile jusqu'à la pompe de distribution (1, 2).
